# EUROPEAN PATENT SPECIFICATION

(11) **EP 3 024 109 B1**
(45) Date of publication and mention of the grant of the patent: **13.02.2019**
(21) Application number: 14826983.0
(22) Date of filing: 11.07.2014
(51) Int. Cl.: H02J 3/36, H02M 1/08, H02M 7/483

(54) **VALVE BASE CONTROL DEVICE AND METHOD FOR MODULAR MULTI-LEVEL CONVERTOR**
VENTILBASISSTEUERUNGSVORRICHTUNG UND VERFAHREN FÜR EINEN MODULAREN MEHRSTUFIGEN UMRICHTER
DISPOSITIF ET PROCÉDÉ DE COMMANDE DE BASE DE VALVE POUR CONVERTISSEUR MULTINIVEAU MODULAIRE

(30) Priority: 15.07.2013 CN 201310300217
(43) Date of publication of application: 25.05.2016
(73) Proprietor: State Grid Corporation of China (SGCC), Beijing 100031 (CN); State Grid Smart Grid Research Institute, Beijing 102211 (CN); China-Epri Electric Power Engineering Co. Ltd., Beijing 102200 (CN)
(72) Inventor: TANG, Guangfu, Beijing 102200 (CN); XIE, Minhua, Beijing 102200 (CN); JIANG, Xirui, Beijing 102200 (CN); GAO, Yang, Beijing 102200 (CN); WANG, Renqiu, Beijing 102200 (CN); YANG, Yuefeng, Beijing 102200 (CN); PANG, Hui, Beijing 102200 (CN); LU, Jianliang, Beijing 102200 (CN); YANG, Bingjian, Beijing 102000 (CN)
(74) Representative: Vidon Brevets & Stratégie
(86) International application number: PCT/CN2014/082048
(87) International publication number: WO 2015/007186

(56) References cited:
- WO-A1-2005/096484
- WO-A1-2012/016592
- CN-A- 102 201 670
- CN-A- 103 036 210
- CN-A- 103 066 567
- CN-A- 103 066 805
- CN-A- 103 368 197
- JP-A- 2000 002 725
- DATABASE WPI Week 201364 Thomson Scientific, London, GB; AN 2013-P70500 XP002768449, -& CN 103 066 567 A (DALIAN POWER SUPPLY CO LTD LIAONING POWE) 24 April 2013 (2013-04-24)
- DATABASE WPI Week 201364 Thomson Scientific, London, GB; AN 2013-P70324 XP002768450, -& CN 103 066 805 A (STATE GRID CORP CHINA) 24 April 2013 (2013-04-24)
- DATABASE WPI Week 201209 Thomson Scientific, London, GB; AN 2012-A71150 XP002768451, -& CN 102 299 506 A (CHINA ELECTRIC POWER RES INST) 28 December 2011 (2011-12-28)
- JIANGCHAO QIN ET AL: "Predictive Control of a Modular Multilevel Converter for a Back-to-Back HVDC System", IEEE TRANSACTIONS ON POWER DELIVERY, IEEE SERVICE CENTER, NEW YORK, NY, US, vol. 27, no. 3, 1 July 2012 (2012-07-01), pages 1538-1547, XP011454687, ISSN: 0885-8977, DOI: 10.1109/TPWRD.2012.2191577

## Description

### Field of the Invention

The present invention generally relates to the technical field of high voltage direct current transmission, and in particular, to a converter valve basic control device for a flexible direct current transmission system based on a high-voltage and high-capacity module multilevel converter and a corresponding method.

### Background of the Invention

Flexible direct current transmission technology (HVDC Flexible) is a novel direct current transmission technology based on a switchable device, pulse width modulation (PWM) technology and a voltage source converter. A module multilevel converter (MMC) uses a multilevel step wave to directly fit a sine wave, and on high-voltage and high-capacity application occasions, harmonic content and loss of the converter can be greatly reduced, so that the module multilevel converter is a most common converter topological structure in the field of the flexible direct current transmission technology at present.

The MMC flexible direct current transmission technology is a novel direct current transmission technology based on a full-controlled device IGBT, in which the converter is composed of a large number of completely identical sub-modules. In an operation process of the system, each sub-module in the converters needs to be controlled and protected independently and accurately in real time, and this is essentially different from conventional high voltage direct current transmission based on thyristors directly connected in series.

The invention patent application "Modular Multilevel Flexible Direct Current Transmission Valve Basic Control Device" (Application No. 2011163078 filed on March 16, 2011 and published as CN102185306 A) describes a valve basic control device applicable for low-capacity MMC flexible direct current transmission applied by the China Electric Power Research Institute. However, the invention is not well applicable to high-capacity MMC flexible direct current transmission technology and engineering with a large number of modules. This is because in the high-capacity MMC flexible direct current transmission engineering, a large number of modules are provided, sometimes a single bridge arm has hundreds of independent sub-modules, and the sub-modules of the same bridge arm are very difficult to control and protect in the same control unit.

Published patent CN103066567 A also discloses a control device in a direct current transmission system based on a modular multi-level converter, ensuring stable and reliable operation of the bridge arm sub-modules.

Published patent CN102201670 A describes a redundancy system in valve-based control equipment, wherein master and slave equipment each have a current control unit and a bridge arm control unit.

However, there remains a need of a new invention to meet the ever-increasing requirement for the valve basic control devices in the high-capacity MMC flexible direct current transmission technology and engineering.

### Summary of the Invention

In view of the above problems, the present invention provides a valve basic control device and method of a module multilevel converter, which can meet the requirement of high-capacity MMC flexible direct current transmission.

According to one aspect of the present invention as defined in the appended claim 1, a converter valve basic control device for a flexible direct current transmission system based on a module multilevel converter is provided.

In a preferred embodiment, the converter valve basic control device includes one current control unit, six bridge arm summary control units and a plurality of bridge arm segmented control units.

In a preferred embodiment, each bridge arm is controlled by one bridge arm summary control unit and a number of bridge arm segmented control units, the bridge arm segmented control units implementing control and protection of the sub-modules of the converter, and the bridge arm summary control unit implementing fault summarization and coordination control of the bridge arm.

In a preferred embodiment, the current control unit, the bridge arm summary control unit and the bridge arm segmented control unit all operate in a hot backup manner.

In a preferred embodiment, through identification of the state of the converter valve basic control device by the current control unit, the bridge arm summary control unit and the bridge arm segmented control unit, redundancy operation of the converter valve basic control device is achieved according to a master/slave state.

In a preferred embodiment, the states of master and standby systems are respectively marked by sending a frequency signal through optical fibers.

According to another aspect, a flexible direct current transmission system based on a module multilevel converter is provided, including the converter valve basic control device mentioned above.

According to a further aspect of the invention as defined in the appended independent claim 8, a converter valve basic control method for a flexible direct current transmission system based on a module multilevel converter is provided.

One advantage lies in that the MMC flexible direct current transmission converter valve basic control device is divided into three levels of function units according to different function requirements, and various functions of the converter valve basic control device are distributed into a plurality of hardware devices to relieve the load of a single hardware processor.

Another advantage lies in that the real-time communication problem of mass data in an actual working condition of the MMC flexible direct current transmission converter is well solved by the hierarchical architecture and the communication modes of the units. Another advantage lies in that the accuracy and instantaneity of control instruction execution and fault information report of the converter are guaranteed generally.

Another advantage lies in that the operation reliability and stability of the equipment are improved by the dual redundancy design of power supply. The flexible direct current valve basic control device designed in the present invention achieves dual redundancy configuration, the valve basic control device implements hierarchical control, and by means of the hierarchical design of the levels, the redundancy of the levels is achieved. The dual redundancy mechanism designed in the present invention achieves effective switchover of dual systems, without leading to dual slaves, and achieves a unique system option in dual master systems to guarantee the normal operation of the systems. A judgment mechanism for detecting a master/slave state of the systems is designed in the present invention to effectively guarantee the identification of the master/standby state of the systems. A judgment error of the system state can be effectively avoided by judging the frequency signal.

Those skilled in the art will realize more advantages of the present invention upon reading and understanding the following detailed description.

### Brief Description of the Drawings

By means of exemplary preferred embodiments described below with reference to accompany drawings, these and other aspects of the present invention will be apparent and clarified. In the drawings:
Fig. 1 is a schematic diagram of a typical structure of a double-end MMC flexible direct current transmission system;
Fig. 2 shows a structure of a converter in the MMC flexible direct current transmission system;
Fig. 3 shows a structure of a valve basic control device according to an embodiment of the present invention;
Fig. 4 shows a relationship between units of the valve basic control device according to an embodiment of the present invention;
Fig. 5 shows a dual redundancy system of the valve basic control device according to an embodiment of the present invention; and
Fig. 6 is a flowchart of a valve basic control method for a flexible direct current transmission system based on a module multilevel converter according to an embodiment of the present invention.

### Detailed Description of the Embodiments

The present invention will be described below in detail with reference to the accompany drawings, but the drawings and the description should be deemed to be illustrative and exemplary, rather than restrictive; and the present invention is not limited to the disclosed embodiments. Any accompany reference numerals in the claims should not be understood as limiting the scope thereof.

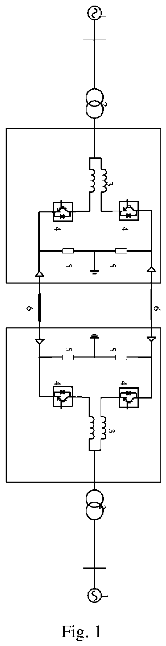

Fig. 1 is a schematic diagram of a typical structure of a double-end MMC flexible direct current transmission system. Converter stations on both sides of a system connected with a double-end alternating current system 1 are MMC converters, a converter station device including an MMC converter 4, a valve reactor 3, a coupling transformer 2, a direct current grounding device 5 and a direct current cable 6. In a back-to-back double-end MMC-HDVC, a direct current cable 7 is possibly not included. The converter 4 is the most central device and is cascaded by a plurality of identical converter sub-modules.

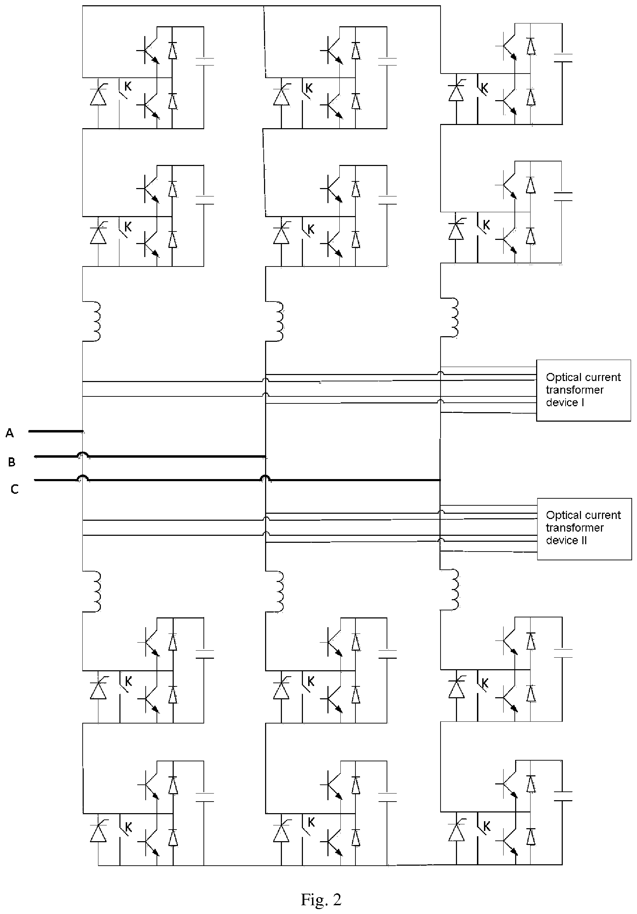

Fig. 2 shows a structure of a converter in the MMC flexible direct current transmission system. As shown in Fig. 2, typically, a module multilevel converter is composed of three phases of six bridge arms in total. Each bridge arm includes a plurality of converter sub-modules.

The main advantages of this structure are avoiding direct serial connection of devices and reducing the design difficulty of a main circuit, but the system is complicated due to the addition of a switching state. The plurality of serially connected sub-modules are accurately triggered and turned off to achieve the functions of the system and require mutually independent real-time control of triggering and turning off; the triggering control and protection difficulty of the valve basic control device is increased, and meanwhile, the reliability of the device is severely challenged. Therefore, with regard to the valve basic control device (VBC) of the MMC system, the system design reasonability, the operation mechanism reliability and the function implementation stability are key problems which directly determine whether the long-term stable and reliable operation of the MMC system is successful or not.

The valve basic control device (VBC) is located at a connecting link position in the flexible direct current transmission system and functions as an intermediate hub for associating an upper layer converter control protection system (SCP) with bottom layer switching element control; compared with the valve basic electronic (VBE) technology of the traditional direct current transmission technology, the valve basic control technology of the flexible direct current transmission technology puts more emphasis on independent control of the sub-modules, including a variety of strategies and decisions of the sub-modules, for example, capacitor voltage balance control, loop current suppression and comprehensive evaluation, protection and search and the like. The main achievement of modulation, loop current suppression control, voltage balance control, valve protection, monitoring and external communication functions and the like.

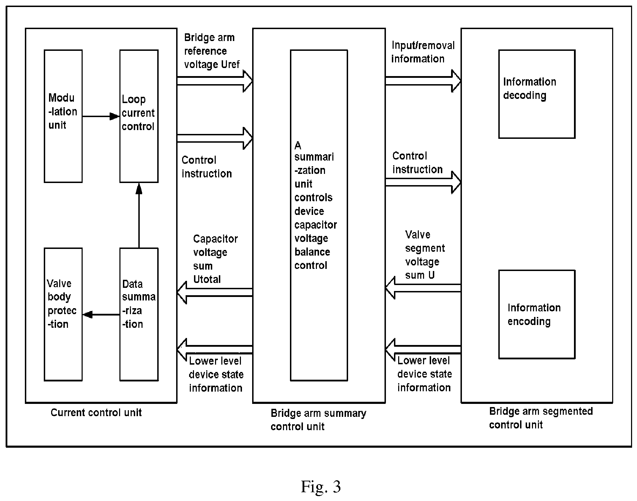

Fig. 3 shows a structure of a valve basic control device according to an embodiment of the present invention. As shown in Fig. 3, the flexible direct current valve basic control device provided by the present invention includes the following components structured in a hierarchical control architecture:
a current control unit, used for controlling a current of the converter, generating an input number of the sub-modules of the bridge arm in real time, obtaining a current direction of the bridge arm and sending number information and current direction information;
a bridge arm summary control unit, used for determining sub-modules to be input or removed according to the received state of each sub-module and the number information and the current direction information received from the current control unit, and sending a determination result; and
a bridge arm segmented control unit, used for inputting or removing the sub-modules according to the determination result received from the bridge arm summary control unit, obtaining the state of each sub-module and sending the state to the bridge arm summary control unit.

By means of a hierarchical and segmented control strategy, the control information is gradually grouped to achieve coordination control of the high-capacity MMC flexible direct current transmission converter and guarantee good electrical properties of alternating and direct current sides.

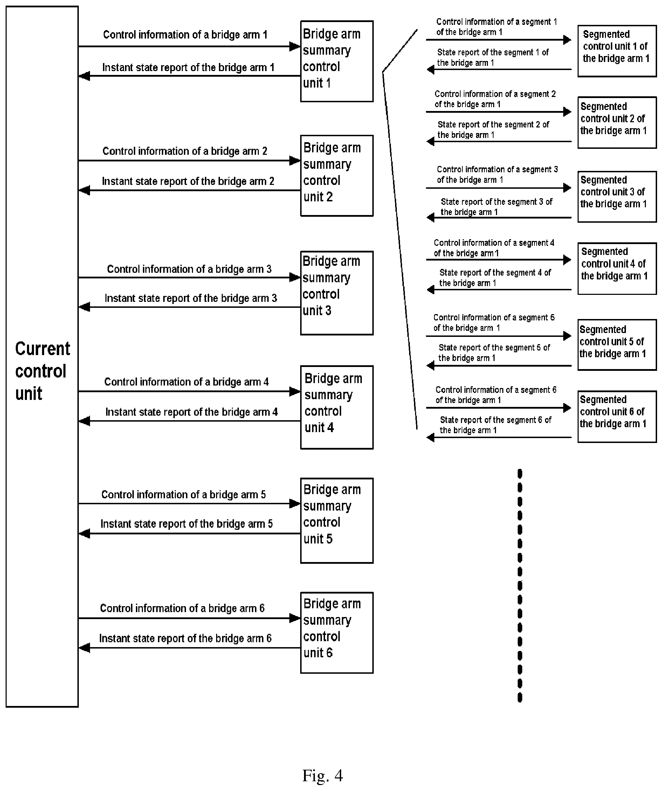

Fig. 4 shows a relationship between units of the valve basic control device according to an embodiment of the present invention. As shown in Fig. 4, in an embodiment, the valve basic control device provided by the present invention includes one current control unit, six bridge arm summary control units and a plurality of bridge arm segmented control units.

Referring to Figs. 3 and 4, processing contents of each function unit will be described below in detail.

### 1) The current control unit

The purpose of current balance control of the bridge arms of the current control unit is to eliminate loop current oscillation between the bridge arms in the operation process of the system. A closed loop input amount of the current balance control is real-time values of capacitor voltages of the sub-modules of the bridge arms and the current of the bridge arms, and after voltage and current hierarchical operation, final output results obtained are additional adjustment values of real-time reference voltages of the bridge arms. The additional adjustment values of the real-time reference voltages of the bridge arms and an adding result of the real-time reference voltages of the bridge arms are used for carrying out a modulation operation, and the purpose of the modulation operation is to convert the real-time reference voltages into the number of the converter sub-modules needing to be input by the bridge arms in real time. The specific method is to divide the real-time reference voltages of the bridge arms with the capacitor voltage of each sub-module, and the obtained result is the number of the converter sub-modules needing to be input by the bridge arms in real time. The operation results of the bridge arms are respectively sent to the bridge arm summary control units of the bridge arms in real time.

### 2) The bridge arm summary control unit

The bridge arm summary control unit communicates with the current control unit upwards and communicates with the bridge arm segmented control unit downwards, is an intermediate link of the entire valve basic control device and functions as a connecting link. The bridge arm summary control unit receives the number of the converter sub-modules input by the bridge arm in real time and issued by the current control unit and the capacitor voltage valves and state information of the converter sub-modules on the bridge arm and issued by the bridge arm segmented control units of the bridge arm in real time. By use of the information received above, the capacitor voltage valves reported by each bridge arm segmented control unit of the bridge arm are ordered in real time, the number of the converter sub-modules needing to be input by each bridge arm segmented control unit of the bridge arm is calculated according to the ordering result and in combination with the number of the converter sub-modules input by the bridge arm in real time, and then, an operation result is sent to each bridge arm segmented control unit of the bridge arm in real time. Meanwhile, the bridge arm summary control unit is responsible for forwarding global locking information issued by the current control unit to each bridge arm segmented control unit and forwarding fault tripping request information reported by each bridge arm segmented control unit to the current control unit, and achieving a bridge arm protection strategy function at the same time.

### 3) The bridge arm segmented control unit

The bridge arm segmented control unit is mainly used for achieving capacitor voltage balance control of the converter sub-modules in segments of the bridge arm: determining modules to be input by the current bridge arm group according to the number of input levels issued by the bridge arm summary control unit, classified summarizing input/removal according to collected converter sub-module state information, ordering the capacitor voltages of the converter sub-modules capable of being input or removed, and controlling the input and removal of different converter sub-modules according to the input/removal number and the actual current direction issued by the summary control unit to maintain the capacitor voltages of the converter sub-modules at the segments within a reasonable range. Meanwhile, the bridge arm segmented control unit is responsible for a valve protection function of the bridge arm segment: judging faults according to the state information reported by the converter sub-modules, correspondingly processing the faults according to fault grades, and uploading fault information and fault processing to the bridge arm summary control unit; and meanwhile, the unit is responsible for achieving a valve level protection strategy function.

The functions of the converter valve basic control device of the high-capacity MMC flexible direct current transmission converter specifically include:
1) modulation: a bridge arm voltage reference value set by an upper layer SCP needs to be calculated into a number of input sub-modules closest to a reference voltage according to an actual capacitor voltage value;
2) current balance control: a loop current control algorithm is added to correct the bridge arm voltage to inhibit loop current among upper and lower bridge arms, phases and stations;
3) voltage balance control: respective input modules of upper and lower bridge arms are determined according to the number of the input levels, collected sub-modules states are classified and summarized, the capacitor voltages of the sub-modules capable of being input or removed are judged, and input-removal control is carried out on different sub-modules according to the actual current direction to maintain the capacitor voltages of the sub-modules within a reasonable range;
4) protection function: faults are judged according to the state information reported by the sub-modules and are correspondingly processed according to the fault grades to avoid malfunction; and overcurrent protection and other actions of the bridge arm are achieved by bridge arm current information of bridge arm optical CT;
5) monitoring function: similar to a traditional direct current terminal monitor (TM) device, the state of the converter is monitored, and a fault or abnormal state is reported to a background in an event form for processing when the same occurs;
6) communication function: high-level data link control (HDLC) communication is achieved with the upper layer SCP, and asynchronous serial communication is achieved with a sub module controller (SMC); a GPS communication interface, an optical CT interface, etc; and
7) self-monitoring function: the units monitor each other therein to detect and find faults in the system and switch the system or trip according to the fault grades.

Requirements on the high-voltage and high-capacity flexible direct current transmission valve basic control device are as follows:
1) unit period algorithm implementation ability within a 50-microsecond level;
2) unit period decision formation and execution ability within a 100-microsecond level;
3) information collection and data throughput ability of more than 2000 paths of channels;
4) a channel time delay within a 10-microsecond level and a data transmission rate of higher than 100M;
5) a transmission error rate under electromagnetic interference within 1‰ of an electromagnetic compatibility standard grade;
6) high stability and high reliability requirements of internal transmission and long-term operation of the system;
7) fault-tolerant ability and robustness requirements of the system;
8) resource information sharing and redundant backup requirements; and
9) system extendibility and requirements of flexible response to a variety of application occasions.

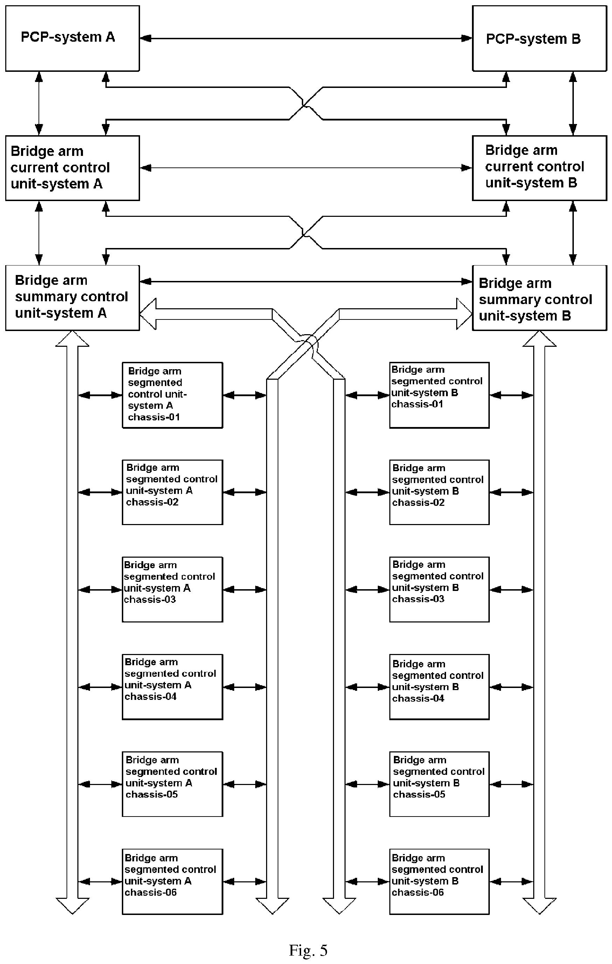

Fig. 5 shows a dual redundancy system of the valve basic control device according to an embodiment of the present invention. As shown in Fig. 5, in an embodiment, the entire valve basic control device adopts an omnibearing dual redundancy hot backup design manner to guarantee the high reliability of the valve basic control device.

The current control unit, the bridge arm summary control unit and the bridge arm segmented control unit are respectively divided into a system A and a system B, the systems A and B are respectively connected with the systems A and B of an upper level control unit, a switchover mechanism between master and standby systems guarantees that the unit system B can be quickly operated in the case of fault of the current unit system A, while the unit system A can quickly react and be quickly operated in the case of fault of the unit system B.

Through identification of the state of the flexible direct current transmission system by the units of the valve basic control device, redundancy operation of the valve basic control device is achieved according to a master/salve state. The states of master and standby systems are respectively marked by sending a frequency signal through optical fibers.

The bridge arm current control unit is located at the first layer and is responsible for controlling the bridge arm current of the converter, the upper level of the bridge arm current control unit is connected with converter station control protection (SCP), the lower level of the bridge arm current control unit is connected with the bridge arm summary control unit, a dual redundancy design solution is adopted, the bridge arm current control unit is divided into a system A and a system B of the bridge arm current control unit, wherein the upper levels of the system A and the system B of the bridge arm current control unit are connected with the system A and the system B of SCP, and the lower levels of the system A and the system B of the bridge arm current control unit are connected with the system A and the system B of the bridge arm summary control unit to constitute a complete dual redundancy system, and the system A and the system B of the bridge arm current control unit are in communication connection through an optical fiber.

The bridge arm summary control unit is located at the second layer and is responsible for controlling the converter bridge arm of the converter, the upper level of the bridge arm summary control unit is connected with the bridge arm current control unit, and the lower level of the bridge arm summary control unit is connected with the bridge arm segmented control unit, the dual redundancy design solution is adopted, the bridge arm summary control unit is divided into a system A and a system B of the bridge arm summary control unit, wherein the upper levels of the system A and the system B of the bridge arm summary control unit are connected with the system A and the system B of the bridge arm current control unit, and the lower levels of the system A and the system B of the bridge arm summary control unit are connected with the system A and the system B of the bridge arm segmented control unit to constitute a complete dual redundancy system, and the The connection between system A and the system B of the bridge arm summary control unit by means of optical fiber communication.

A dual redundancy master-standby mechanism is as follows:
1) In a normal state, the operation states of the system A and the system B are normal, then the system A and the system B maintain respective states. The firstly started system is a master system, and the subsequently started system is a standby system. After being started, the bridge arm current control unit checks whether the operation state of the system is normal, stores the state of the system and checks the state of an opposite party system. If the opposite party system is normal and is the master system, the system is normal, the system is in a standby state, and if the opposite party system is abnormal or the opposite party system has no reply, the system is the master system. If the system is abnormal, the system cannot serve as the master system, and the system is set to be abnormal.
2) In a normal operation process, if the master system is abnormal and the opposite party system is normal, the opposite party system will check the abnormality of the system, the system actively switches to the slave system, and the opposite party system becomes the master system.
3) In the normal operation process, if the master system is abnormal and the opposite party system is abnormal as well, it indicates that the bridge arm current control unit is abnormal and needs to request for tripping.
4) If the system A and the system B are master systems at the same time, the two systems exchange information through a communication optical fiber, the system requesting for switching the opposite party system to the slave system is converted into the master system, and the opposite party system is switched to the slave system. If the communication between the system A and the system B is abnormal, double master systems occur.

The bridge arm segmented control unit is located at the third layer and is connected with the converter, the upper level of the bridge arm segmented control unit is connected with the bridge arm summary control unit, the lower level of the bridge arm segmented control unit is connected with the bridge arm of the converter, the dual redundancy design solution is adopted, the bridge arm segmented control unit is divided into a system A and a system B, wherein the upper levels of the system A and the system B of the bridge arm segmented control unit are connected with the system A and the system B of the bridge arm summary control unit, and the lower levels of the system A and the system B of the bridge arm segmented control unit are connected with the bridge arm of the converter to constitute a complete dual redundancy system, and the system A and the system B of the bridge arm segmented control unit are in communication connection through an optical fiber.
1) In a normal state, the operation states of the system A and the system B are normal, then the system A and the system B maintain respective states. The firstly started system is a master system, and the subsequently started system is a standby system. After being started, the bridge arm current control unit checks whether the operation state of the system is normal, stores the state of the system and checks the state of an opposite party system. If the opposite party system is normal and is the master system, the system is normal, the system is in a standby state, and if the opposite party system is abnormal or the opposite party system has no reply, the system is the master system. If the system is abnormal, the system cannot serve as the master system, and the system is set to be abnormal.
2) In the normal operation process, if the master system is abnormal and the opposite party system is normal, the opposite party system will check the abnormality of the system, the system actively switches to the slave system, and the opposite party system becomes the master system.
3) In the normal operation process, if the master system is abnormal and the opposite party system is abnormal as well, it indicates that the bridge arm current control unit is abnormal and needs to request for tripping.
4) If the system A and the system B are master systems at the same time, the two systems exchange information through the communication optical fiber, the system requesting for switching the opposite party system to the slave system is converted into the master system, and the opposite party system is switched to the slave system. If the communication between the system A and the system B is abnormal, double master systems occur. The bridge arm segmented control unit only has one outlet at last, and the original master system in the double master systems sends a signal to the converter.

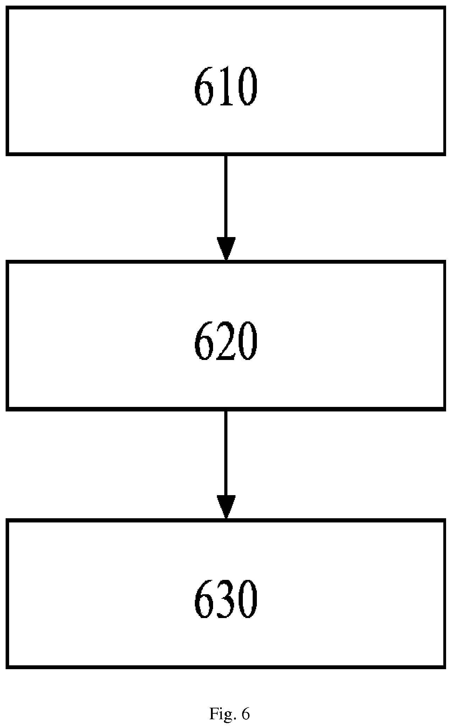

Fig. 6 shows a flowchart of a converter valve basic control method for a flexible direct current transmission system based on a module multilevel converter according to the present invention, the module multilevel converter being provided with a bridge arm including a plurality of cascaded sub-modules, the method including the following steps:
610, controlling a current of the converter, generating an input number of the sub-modules of the bridge arm in real time, obtaining a current direction of the bridge arm, and sending number information and current direction information;
620, determining sub-modules to be input or removed according to the received state of each sub-module and the received number information and the current direction information, and sending a determination result; and
630, inputting or removing the sub-modules according to the determination result, and obtaining and sending the state of each sub-module.

The present invention has been described with reference to the preferred embodiments. Upon reading and understanding the foregoing detailed description, modifications and changes can be made by others. The present invention is intended to be construed as including all of these modifications and changes, as long as they are within the scope the appended claims.

## Claims

1. A converter valve basic control device for a flexible direct current transmission system based on a module multilevel converter, the module multilevel converter being provided with a bridge arm comprising a plurality of cascaded sub-modules, the converter valve basic control device comprising the following components structured in a hierarchical control architecture:
a current control unit used for controlling a current of the converter, for generating in real time the number of the sub-modules of the bridge arm to be input, for obtaining a current direction of the bridge arm and for outputting the number information and the current direction information;
wherein the current control unit receives real-time values of capacitor voltages of the sub-modules of the bridge arms and the current of the bridge arms, and generates additional adjustment values of real-time reference voltages of the bridge arms, which are used for carrying out a modulation operation, the purpose of which is to convert the real-time reference voltages into the number of the converter sub-modules needing to be input by the bridge arms in real time;
a bridge arm summary control unit used for determining sub-modules to be input or removed according to the received state of each sub-module and according to the number information and the current direction information received from the current control unit, and which outputs the determined result; and
a bridge arm segmented control unit used for inputting or removing the sub-modules according to the determined result received from the bridge arm summary control unit, and which obtains the state of each sub-module and sends the state to the bridge arm summary control unit, **characterised in that** the current control unit, the bridge arm summary control unit and the bridge arm segmented control unit are all of a dual redundancy design in which the current control unit, the bridge arm summary control unit and the bridge arm segmented control unit are respectively divided into a system A and a system B, wherein the systems A and B are respectively connected with the systems A and B of an upper level control unit, and a switch-over mechanism between master and standby systems guarantees that the system B can be quickly operated in the case of a fault of the system A, while the system A can quickly react and be quickly operated in the case of a fault of the system B.

2. The converter valve basic control device of claim 1, wherein:
the converter valve basic control device comprises one current control unit, six bridge arm summary control units and a plurality of bridge arm segmented control units.

3. The converter valve basic control device of claim 2, wherein:
each bridge arm is controlled by one bridge arm summary control unit and a number of bridge arm segmented control units, the bridge arm segmented control units implementing control and protection of the sub-modules of the converter, and the bridge arm summary control unit implementing fault summarization and coordination control of the bridge arm.

4. The converter valve basic control device of claim 1, wherein:
the current control unit, the bridge arm summary control unit and the bridge arm segmented control unit all operate in a hot backup manner

5. The converter valve basic control device of claim 1, wherein:
through identification of the state of the converter valve basic control device by the current control unit, the bridge arm summary control unit and the bridge arm segmented control unit, redundancy operation of the converter valve basic control device is achieved according to a master/slave state.

6. The converter valve basic control device of claim 5, wherein:
the states of master and standby systems are respectively marked by sending a frequency signal through optical fibers.

7. A flexible direct current transmission system based on a module multilevel converter, comprising the converter valve basic control device of any one of claims 1-6.

8. A converter valve basic control method for a flexible direct current transmission system based on a module multilevel converter, the module multilevel converter being provided with a bridge arm comprising a plurality of cascaded sub-modules, the converter valve basic control device being structured in a hierarchical control architecture comprising current control unit, a bridge arm summary control unit and a bridge arm segmented control unit, the method comprising:
using the current control unit to control a current of the converter, to generate in real time the number of the sub-modules of the bridge arm to be input, to obtain a current direction of the bridge arm, and to output number information and current direction information; using the bridge arm summary control unit to determine sub-modules to be input or removed according to the received state of each sub-module and the received number information and the current direction information, and to output the determined result; and
using the bridge arm segmented control unit to input or to remove the sub-modules according to the determined result received from the bridge arm summary control unit, to obtain the state of each sub-module and to send the state to the brdige arm summary control unit, **characterised in that** the current control unit, the bridge arm summary control unit and the bridge arm segmented control unit are all of a dual redundancy design in which the current control unit, the bridge arm summary control unit and the bridge arm segmented control unit are respectively divided into a system A and a system B, wherein the systems A and B are respectively connected with the systems A and B of an upper level control unit, and a switch-over mechanism between master and standby systems guarantees that the system B can be quickly operated in the case of a fault of the system A, while the system A can quickly react and by quickly operated in the case of a fault of the system B.

## Patentansprüche

1. Umrichterventilbasissteuerungsvorrichtung für ein flexibles Gleichstromübertragungssystem basierend auf einem Modulmehrstufenumrichter, wobei der Modulmehrstufenumrichter mit einem Brückenarm bereitgestellt ist, der mehrere kaskadierte Untermodule aufweist, wobei die Umrichterventilbasissteuerungsvorrichtung die folgenden Komponenten strukturiert in einer hierarchischen Steuerarchitektur umfasst:
eine Stromsteuereinheit, die zur Steuerung eines Stroms des Umrichters verwendet wird, um in Echtzeit die Anzahl der einzugebenden Untermodule des Brückenarms zu generieren, um eine Stromrichtung des Brückenarms zu erhalten, und zum Ausgeben der Anzahlinformationen und der Stromrichtungsinformationen;
wobei die Stromsteuereinheit Echtzeitwerte von Kondensatorspannungen der Untermodule des Brückenarms und dem Strom der Brückenarme empfängt und zusätzliche Einstellwerte von Echtzeitreferenzspannungen der Brückenarme erzeugt, die zum Ausführen einer Modulationsfunktion verwendet werden, dessen Zweck es ist, die Echtzeitreferenzspannungen in die Anzahl der Konverteruntermodule zu konvertieren, die benötigt werden, um durch die Brückenarme in Echtzeit eingegeben zu werden;
eine Brückenarmüberblickssteuereinheit, die zum Bestimmen von Untermodulen, die eingegeben oder entfernt werden, gemäß dem empfangenen Zustand jedes Untermoduls und gemäß der Anzahlinformationen und der Stromrichtungsinformationen, die von der Stromsteuereinheit empfangen wurden, verwendet wird und welche die bestimmten Ergebnisse ausgibt;
und eine Brückenarmsegmentsteuereinheit, die zum Eingeben oder Entfernen der Untermodule gemäß dem bestimmten Ergebnis, das von der Brückenarmüberblickssteuereinheit empfangen wurde, verwendet wird, und die den Zustand jedes Untermoduls erfasst und den Zustand an die Brückenarmüberblickssteuereinheit aussendet, **dadurch gekennzeichnet, dass**
die Stromsteuereinheit, die Brückenarmüberblickssteuereinheit und die Brückenarmsegmentsteuereinheit alle einem dualen Redundanzdesign unterliegen, bei dem die Stromsteuereinheit, die Brückenarmüberblickssteuereinheit und die Brückenarmsegmentsteuereinheit entsprechend in ein System A und ein System B geteilt sind, wobei die Systeme A und B entsprechend mit den Systemen A und B einer Oberstufensteuereinheit verbunden sind, und ein Umschaltmechanismus zwischen Master- und Standby-System garantiert, dass das System B schnell im Falle eines Fehlers des Systems A betrieben werden kann, während das System A schnell reagieren kann und schnell in dem Fall eines Fehlers des Systems B betrieben werden kann.

2. Umrichterventilbasissteuerungsvorrichtung nach Anspruch 1, wobei:
die Umrichterventilbasissteuerungsvorrichtung eine Stromsteuereinheit, sechs Brückenarmüberblickssteuereinheiten und mehrere Brückenarmsegmentsteuereinheiten umfasst.

3. Umrichterventilbasissteuerungsvorrichtung nach Anspruch 2, wobei:
jeder Brückenarm durch eine Brückenarmüberblickssteuereinheit und eine Anzahl von Brückenarmsegmentsteuereinheiten gesteuert wird, die Brückenarmsegmentsteuereinheiten eine Steuerung und Sicherung der Untermodule des Umrichters implementieren und die Brückenarmüberblickssteuereinheit einen Fehlerüberblick und Koordinationssteuerung der Brückenarme implementiert.

4. Umrichterventilbasissteuerungsvorrichtung nach Anspruch 1, wobei:
die Stromsteuereinheit, die Brückenarmüberblickssteuereinheit und die Brückenarmsegmentsteuereinheit alle in einer Hot-Backup-Weise betrieben werden.

5. Umrichterventilbasissteuerungsvorrichtung nach Anspruch 1, wobei:
durch die Identifikation des Zustands der Umrichterventilbasissteuerungsvorrichtung durch die Stromsteuereinheit, die Brückenarmüberblickssteuereinheit und die Brückenarmsegmentsteuereinheit ein Redundanzbetrieb der Umrichterventilbasissteuerungsvorrichtung gemäß einem Master-Slave-Zustand erreicht wird.

6. Umrichterventilbasissteuerungsvorrichtung nach Anspruch 5, wobei:
die Zustände des Master- und Standby-Systems jeweils durch Senden eines Frequenzsignals durch optische Fasern markiert sind.

7. Flexibles Gleichstromübertragungssystem basierend auf Modulmehrstufenumrichtern, umfassend die Umrichterventilbasissteuerungsvorrichtung nach einem der Ansprüche 1 bis 6.

8. Umrichterventilbasissteuerungsverfahren für ein flexibles Gleichstromübertragungssystem basierend auf einem Modulmehrstufenumrichter, wobei der Modulmehrstufenumrichter mit einem Brückenarm bereitgestellt ist, der mehrere kaskadierte Untermodule aufweist, wobei die Umrichterventilbasissteuerungsvorrichtung in einer hierarchischen Steuerarchitektur strukturiert ist, die eine Stromsteuereinheit, eine Brückenarmüberblickssteuereinheit und eine Brückenarmsegmentsteuereinheit umfasst, wobei das Verfahren umfasst:
Verwenden der Stromsteuereinheit zum Steuern eines Stroms des Umrichters, zum Erzeugen der Anzahl von Untermodulen des Brückenarms, die eingegeben werden sollen in Echtzeit, zum Erhalten einer Stromrichtung der Brückenarme, und zum Ausgeben der Anzahlinformationen und Stromrichtungsinformationen;
Verwenden der Brückenarmüberblickssteuereinheit zum Bestimmen einzugebender oder zu entfernender Untermodule gemäß dem Empfangszustand jedes Untermoduls und der empfangenen Anzahlinformationen und Stromrichtungsinformationen und zum Ausgeben der bestimmten Ergebnisse; und
Verwenden der Brückenarmüberblickssteuereinheit zur Eingabe oder zum Entfernen der Untermodule gemäß der bestimmten Ergebnisse, die von der Brückenarmüberblickskontrollsteuereinheit erhalten wurden, zum Erhalten des Zustands jedes Untermoduls und zum Senden des Zustands an die Brückenarmüberblickskontrollsteuereinheit, **dadurch gekennzeichnet, dass**
die Stromsteuereinheit, die Brückenarmüberblickssteuereinheit und die Brückenarmsegmentsteuereinheit alle einem dualen Redundanzdesign unterliegen, bei dem die Stromsteuereinheit, die Brückenarmüberblickssteuereinheit und die Brückenarmsegmentsteuereinheit entsprechend in ein System A und ein System B geteilt sind, wobei die Systeme A und B entsprechend mit den Systemen A und B einer Oberstufensteuereinheit verbunden sind, und ein Umschaltmechanismus zwischen Master- und Standby-System garantiert, dass das System B schnell im Falle eines Fehlers des Systems A betrieben werden kann, während das System A schnell reagieren kann und schnell in dem Fall eines Fehlers des Systems B betrieben werden kann.

## Revendications

1. Dispositif de commande de base de valve de convertisseur pour un système de transmission de courant continu flexible d'après un convertisseur multiniveau modulaire, le convertisseur multiniveau modulaire étant pourvu d'une branche de pont comprenant une pluralité de sous-modules en cascade, le dispositif de commande de base de valve de convertisseur comprenant les composants suivants structurés en une architecture de commande hiérarchique :
une unité de commande de courant utilisée pour réaliser la commande de courant du convertisseur, pour générer en temps réel le nombre des sous-modules de la branche de pont à introduire, pour acquérir un sens de courant de la branche de pont et pour fournir en sortie les informations de nombre et les informations de sens de courant ;
dans lequel l'unité de commande de courant reçoit des valeurs en temps réel de tensions de condensateur des sous-modules des branches de pont et du courant des branches de pont, et génère des valeurs de réglage supplémentaires de tensions de référence en temps réel des branches de pont, qui sont utilisées pour réaliser une opération de modulation, dont le but est de convertir les tensions de référence en temps réel en un nombre des sous-modules de convertisseur nécessitant d'être introduits par les branches de pont en temps réel ;
une unité de commande de collecte de branche de pont utilisée pour déterminer des sous-modules à introduire ou retirer en fonction de l'état reçu de chaque sous-module et des informations de nombre et des informations de sens de courant qui sont reçues en provenance de l'unité de commande de courant, et qui fournit en sortie le résultat déterminé ; et
une unité de commande de sous-section de branche de pont utilisée pour réaliser l'introduction ou le retrait de chaque sous-module selon le résultat déterminé reçu en provenance de l'unité de commande de collecte de branche de pont, et qui obtient l'état de chaque sous-module et envoie l'état à l'unité de commande de collecte de branche de pont, **caractérisé en ce que** l'unité de commande de courant, l'unité de commande de collecte de branche de pont et l'unité de commande de sous-section de branche de pont ont toutes une conception à double redondance dans laquelle l'unité de commande de courant, l'unité de commande de collecte de branche de pont et l'unité de commande de sous-section de branche de pont sont divisées respectivement en un système A et un système B, dans lequel les systèmes A et B sont connectés respectivement aux systèmes A et B d'une unité de commande de niveau supérieur, et un mécanisme de basculement entre des systèmes maître et auxiliaire garantit que le système B peut être actionné rapidement dans le cas d'une défaillance du système A, tandis que le système A peut réagir rapidement et être actionné rapidement dans le cas d'une défaillance du système B.

2. Dispositif de commande de base de valve de convertisseur selon la revendication 1, dans lequel :
le dispositif de commande de base de valve de convertisseur comprend une unité de commande de courant, six unités de commande de collecte de branche de pont et une pluralité d'unités de commande de sous-section de branche de pont.

3. Dispositif de commande de base de valve de convertisseur selon la revendication 2, dans lequel :
chaque branche de pont est commandée par une unité de commande de collecte de branche de pont et un nombre d'unités de commande de sous-section de branche de pont, les unités de commande de sous-section de branche de pont mettant en oeuvre une commande et une protection des sous-modules du convertisseur, et l'unité de commande de collecte de branche de pont mettant en oeuvre une récapitulation de défaillance et une commande de coordination de la branche de pont.

4. Dispositif de commande de base de valve de convertisseur selon la revendication 1, dans lequel :
l'unité de commande de courant, l'unité de commande de collecte de branche de pont et l'unité de commande de sous-section de branche de pont fonctionnent toutes en sauvegarde à chaud.

5. Dispositif de commande de base de valve de convertisseur selon la revendication 1, dans lequel :
par l'intermédiaire d'une identification de l'état du dispositif de commande de base de valve de convertisseur par l'unité de commande de courant, l'unité de commande de collecte de branche de pont et l'unité de commande de sous-section de branche de pont, un fonctionnement en redondance du dispositif de commande de base de valve de convertisseur est atteint selon un état maître/esclave.

6. Dispositif de commande de base de valve de convertisseur selon la revendication 5, dans lequel :
les états de systèmes maître et auxiliaire sont marqués respectivement en envoyant un signal de fréquence par l'intermédiaire de fibres optiques.

7. Système de transmission de courant continu flexible d'après un convertisseur multiniveau modulaire, comprenant le dispositif de commande de base de valve de convertisseur de l'une quelconque des revendications 1 à 6.

8. Procédé de commande de base de valve de convertisseur pour un système de transmission de courant continu flexible d'après un convertisseur multiniveau modulaire, le convertisseur multiniveau modulaire étant pourvu d'une branche de pont comprenant une pluralité de sous-modules en cascade, le dispositif de commande de base de valve de convertisseur étant structuré en une architecture de commande hiérarchique comprenant une unité de commande de courant, une unité de commande de collecte de branche de pont et une unité de commande de sous-section de branche de pont, le procédé comprenant :
l'utilisation de l'unité de commande de courant pour commander un courant du convertisseur, pour générer en temps réel le nombre des sous-modules de la branche de pont à introduire, pour acquérir un snes de courant de la branche de pont, et pour fournir en sortie des informations de nombre et des informations de direction de courant ;
l'utilisation de l'unité de commande de collecte de branche de pont pour déterminer des sous-modules devant être introduits ou retirés en fonction de l'état reçu de chaque sous-module et des informations de nombre et des informations de sens de courant reçues, et pour fournir en sortie le résultat déterminé ; et
l'utilisation de l'unité de commande de sous-section de branche de pont pour réaliser l'introduction ou le retrait des sous-modules selon le résultat déterminé reçu en provenance de l'unité de commande de collecte de branche de pont, pour obtenir l'état de chaque sous-module et pour envoyer l'état à l'unité de commande de collecte de branche de pont,
**caractérisé en ce que**
l'unité de commande de courant, l'unité de commande de collecte de branche de pont et l'unité de commande de sous-section de branche de pont ont toutes une conception à double redondance dans laquelle l'unité de commande de courant, l'unité de commande de collecte de branche de pont et l'unité de commande de sous-section de branche de pont sont divisées respectivement en un système A et en un système B, dans lequel les systèmes A et B sont connectés respectivement aux systèmes A et B d'une unité de commande de niveau supérieur, et un mécanisme de basculement entre des systèmes maître et auxiliaire garantit que le système B peut être actionné rapidement dans le cas d'une défaillance du système A, tandis que le système A peut réagir rapidement et être actionné rapidement dans le cas d'une défaillance du système B.
